# EUROPEAN PATENT APPLICATION

(11) **EP 3 239 692 A1**
(43) Date of publication of application: **01.11.2017**
(21) Application number: 16167632.5
(22) Date of filing: 29.04.2016
(51) Int. Cl.: G01N 21/35, G01N 21/552, G01N 21/65, G01N 21/64, B01L 3/00

(54) **A SENSOR, METHOD AND SYSTEM FOR DETECTING AN ANALYTE IN A FLUID**

(71) Applicant: Insplorion Sensor Systems AB, 413 90 Göteborg (SE)
(72) Inventor: LANGHAMMAR, Christoph, 417 67 Göteborg (SE); FRITZSCHE, Joachim, 431 37 Mölndal (SE); WESTERLUND, Fredrik, 443 51 Lerum (SE)
(74) Representative: Awapatent AB

(57) **Abstract**

The present invention relates to a sensor for detecting an analyte in a fluid. The sensor (100) comprising: a fluidic channel (102) arranged to receive a flow of the fluid, a plasmonic sensor (104) which upon resonant excitation exhibits a localized surface plasmon resonance condition thereby forming a sensing volume (106) within the fluidic channel (102), a binding portion (108) arranged inside the sensing volume (106) for binding the analyte. A system for detecting an analyte in a fluid, the system comprising the sensor, and a method for detecting an analyte in a fluid are also presented.

## Description

### Technical field

The present invention relates to a sensor for detecting an analyte in a fluid, a system for detecting an analyte in a fluid, the system comprising the sensor and a method for detecting an analyte in a fluid.

### Background

Measuring tiny amounts of chemical and biological entities is one of the most important tasks in chemistry, biology, medicine, environmental monitoring and homeland security. Although existing methods are numerous and powerful, they still suffer from insufficient sensitivity, long detection times, necessity of labelling and high cost. This is a particular problem for medical diagnostics where, although it is well known that blood contains analytes such as molecules that may reveal the presence of a disease, their identification is challenging or even impossible because of their very low concentrations in the femto- to attomolar range.

Another area of high relevance is high-resolution monitoring of airborne analytes such as pollutants like CO, NOₓ or SOₓ at ppb levels to reliably assess their impact on human health, enable urban planners to craft and accurately evaluate new policies, and increase public awareness.

Plasmonic sensors are promising to provide a solution for this challenge since they combine high sensitivity, label-free detection, and vast miniaturization and multiplexing potential. These prospects have fuelled the vibrant field of plasmonic bio- and gas-sensing, which has enabled a wide range of fascinating novel sensing concepts, with single molecule detection as the "holy grail" of the field.

The above applications are, however, to date only possible at high analyte concentrations. Hence, there is a need for improved sensors allowing for detection of analytes at lower concentrations down to the femto- to attomolar ranges.

### Summary of the invention

In view of the above, it is an object of the present invention to provide improved detection of an analyte in a fluid.

According to a first aspect a sensor for detecting an analyte in a fluid is provided. The sensor comprising: a fluidic channel arranged to receive a flow of the fluid, a plasmonic sensor which upon resonant excitation exhibits a localized surface plasmon resonance condition thereby forming a sensing volume within the fluidic channel, a binding portion arranged inside the sensing volume for binding the analyte.

The wording *fluid* is to be understood as a substance that continually deforms (flows) under an applied force. Hence, fluids are a subset of the phases of matter and include, for example, liquids and gases.

The *analyte* may be the target analyte or an analyte indicative of the target analyte.

The wording *plasmonic sensor* should be construed as a sensor in which plasmons may be excited. Plasmons should here be understood as quanta of plasma oscillations associated with a local collective oscillation of charge density. The charges may for instance be provided by electrons within the conduction band of the material of the plasmonic sensor.

The wording *localized surface plasmon resonance,* LSPR, is to be understood as an excited state of the charge carriers within the plasmonic sensor, which can be excited by photons, i.e., by the electromagnetic field of light, incident on the plasmonic sensor. The resonant excitation of the plasmonic sensor thereby induces the LSPR. Charge carriers such as electrons or holes may also be used to excite the plasmonic sensor inducing an LSPR condition.

The *LSPR condition* is to be understood as a resonance condition associated to the collective oscillation of charge density and to the boundary conditions resulting from the finite size of the plasmonic sensor. As a result, a charge density wave is formed with a frequency/wavelength/energy that is set by the electronic properties of the material of the plasmonic sensor, its geometry, size and the material properties of the environment surrounding the plasmonic sensor. As an example, the LSPR typically occurs in the visible part of the electromagnetic wavelength spectrum if the plasmonic sensor is a gold nanoparticle having a diameter in the range of 50-100 nm.

It should further be understood that the LSPR condition may occur when the electromagnetic radiation interacts with the plasmonic sensor. As a result an enhanced local electromagnetic field is created in the close vicinity of the plasmonic sensor. The enhanced electric field forms the sensor volume as will be described below. The strength of the enhancement and the spatial extent of the enhanced field depend on a number of parameters such as the material, size, shape, and environment of the plasmonic sensor. The enhanced electric field is beneficial as it improves the sensitivity of the plasmonic sensor.

*Resonant excitation* may therefore be understood as resonant excitation by light or charge carriers such that the plasmonic sensor exhibits.

The wording *sensing volume* is to be understood as a volume defined by the spatial extension of the electromagnetic field from the excited localized surface plasmon resonance. It is to be understood that the plasmonic sensor is arranged in relation to the fluidic channel such that the electromagnetic radiation generated by the plasmonic sensor at the resonance condition creates a sensing volume within the fluidic channel. The sensing volume is characterized by an enhanced electric field. Since the spatial extension of this electromagnetic field depends both on the details of the plasmonic sensor, on the properties of the materials surrounding the plasmonic sensor and on the direction of the incident electromagnetic field in relation to the geometry of the plasmonic sensor, the volume of the sensing volume depends on all these parameters. To this end, the electromagnetic field related to the excited LSPR falls of gradually, often approximately exponentially, away from the plasmonic sensor such that the sensing volume typically has an extension on the length scale of 10-100 nm. Hence the plasmonic sensor provides a local probe volume within the fluidic channel.

The wording a *binding portion* should be understood as a material arranged inside the sensing volume for binding the analyte. The probability for binding an analyte to the sensing volume is thereby increased. The binding portion may, for example, comprise receptor molecules attached to a plasmonic sensor of gold. Alternatively, the plasmonic sensor constitutes the binding portion. The binding portion may be a functionalizing reagent tailored for specific binding of an analyte.

The binding portion may form a binding layer.

The binding portion may comprise separate sub portions comprising a binder for binding the analyte.

The binding portion may be configured to bind a specific analyte.

The LSPR condition for the plasmonic sensor is changed when an analyte is bound to the binding portion inside the sensing volume. As a result the amount of light of a specific wavelength that is scattered from or absorbed by the plasmonic sensor and/or the sensing volume is different from that when no analyte is bound to the binding portion. In other words, the cross-section for scattering and/or absorption is changed. Hence, a given light intensity at the specific wavelength scattered from or absorbed by the plasmonic sensor and/or the sensing volume is indicative of the analyte being present in the fluid. Alternatively, a change in light intensity at a specific wavelength of light scattered by the plasmonic sensor may be measured to determine when the analyte is bound to the binding portion.

The spatial light distribution of light scattered from the plasmonic sensor may change. The change in light distribution may be used for determining when the analyte is bound to the binding portion.

A change in light spectrum, i.e. light intensity vs. energy, of the light scattered from or absorbed by the plasmonic sensor may further be used to detect the analyte.

The binding portion may be arranged at a distance from the walls of the fluidic channel. An efficient binding of the analyte at a location inside the fluidic channel may thereby be achieved. An advantage being that the fluid and the analyte may be directed to the binding portion. Undesired binding at the walls of the fluidic channel may, moreover, be mitigated.

The binding portion may be integrated in the plasmonic sensor. The plasmonic sensor may thereby comprise the binding portion. Alternatively, the plasmonic sensor may form the binding portion. Hence, an effective binding of the analyte to the plasmonic sensor may be obtained.

The binding portion may be arranged at a distance from the plasmonic sensor. A larger flexibility for arranging the binding portion in the sensing volume of the plasmonic sensor is thereby achieved. An analyte bound to the binding portion may thereby be separated from the plasmonic sensor. An undesirable chemical interaction or charge transport between the analyte and the plasmonic sensor may thereby be prevented.

The plasmonic sensor may comprise a pair of plasmonic sensor elements arranged to collectively create the sensing volume upon resonant excitation of the plasmonic sensor. An improved field enhancement in the sensing volume may thereby be obtained. The extension of the sensing volume may moreover be tailored by the arrangement of the plasmonic elements, e.g. by the separation of the plasmonic sensor elements. A closer separation between the plasmonic sensor elements may increase the field enhancement.

The plasmonic sensor elements may be arranged at opposite sides of the fluidic channel. An efficient formation of the sensing volume within the fluidic channel is thereby provided.

At least a portion of the plasmonic sensor may be arranged inside the fluidic channel. An analyte may thereby be efficiently guided to the plasmonic sensor. Constraints on the width of the fluidic channel are, moreover, reduced as the fluid may efficiently be brought in contact with the plasmonic sensor.

The fluidic channel may be defined by a first material and the plasmonic sensor may comprise a second material, the second material being different from the first material. The material contrast between the first and the second material may provide an improved selectivity in the binding of the analyte to the plasmonic sensor. The amount of light scattered from the respective materials may, moreover, be tailored by the choice of materials. An improved signal-to-noise in the detection of the analyte may thereby be provided.

The fluidic channel may have a rectangular cross-section.

The sensor may comprise a plurality of plasmonic sensors separately arranged along the fluidic channel. The plurality of plasmonic sensors allows for detection of an analyte along the fluidic channel.

According to a second aspect a system for detecting an analyte in a fluid is provided. The system comprising: the sensor according to the above, an excitation source arranged to resonantly excite the plasmonic sensor, a detector arranged to detect light scattered from or absorbed by the excited plasmonic sensor and/or the sensing volume.

The above-mentioned features of the sensor, when applicable, apply to this second aspect as well. In order to avoid undue repetition, reference is made to the above.

The excitation source may be a light source arranged to direct light along the fluidic channel. Problems associated with light scattering from the fluidic channel may thereby be reduced.

According to a third aspect a method for detecting an analyte in a fluid is provided. The method comprising: directing a flow of the fluid through a fluidic channel, forming a sensing volume within the fluidic channel by resonantly exciting a plasmonic sensor, the plasmonic sensor thereby exhibiting a localized surface plasmon resonance condition, binding the analyte by means of a binding portion inside the sensing volume, measuring light scattered from or absorbed by the excited plasmonic sensor and/or the sensing volume to detect the binding of the analyte by a change in the scattered or absorbed light.

The above-mentioned features of the sensor or the system, when applicable, apply to this third aspect as well. In order to avoid undue repetition, reference is made to the above.

The method may further comprise an initial step of forming the binding portion by contacting a binder to a binder body. The binder for binding the analyte may thereby comprise a material being different from that of the binder body. A larger flexibility in choosing the binder may thereby be provided.

The method may further comprise selecting a binding portion on basis of the analyte to be detected. The sensitivity of the method may thereby be improved. The binding portion may provide binding of a predetermined analyte to the binding portion. Hence, an analyte-selective binding may be provided.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief Description of the Drawings

The above and other aspects of the present invention will now be described in more detail, with reference to appended drawings showing embodiments of the invention. The figures should not be considered as limiting the invention to the specific embodiment; instead they are used for explaining and understanding the invention.

As illustrated in the figures, the sizes of layers and regions are exaggerated for illustrative purposes and, thus, are provided to illustrate the general structures of embodiments of the present invention. Like reference numerals refer to like elements throughout.
Fig. 1 illustrates a sensor for detecting an analyte in a fluid.
Fig. 2 illustrates a sensor comprising a plasmonic sensor.
Fig. 3 illustrates a sensor comprising a plasmonic sensor.
Fig. 4 illustrates a flow chart illustrating a method for detecting an analyte.
Fig. 5 illustrates events in a sensor for detecting an analyte.
Fig. 6 shows a schematic drawing of a fabricated sensor.
Fig. 7 illustrates the measured LSPRs of a gold plasmonic sensor.
Fig. 8 illustrates time-dependent LSPR shift of an individual gold plasmonic sensor.
Fig. 9 illustrates a system for detecting an analyte in a fluid.
Figs. 10a and 10b illustrate schematically how an analyte binding to a plasmonic sensor is detected by the system disclosed in Fig. 9.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

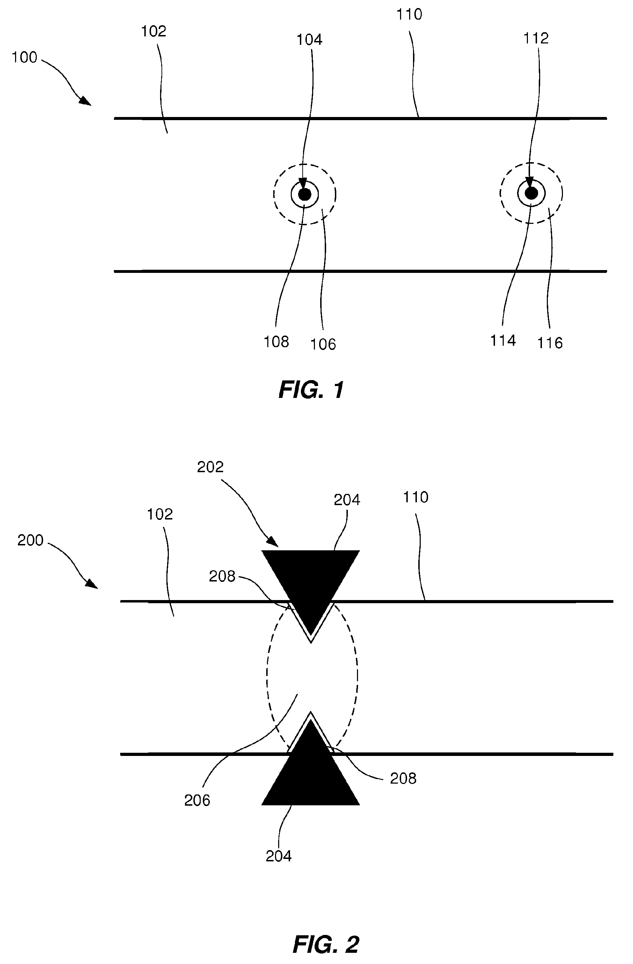

Fig. 1 illustrates a sensor for detecting an analyte in a fluid. The sensor 100 comprises a fluidic channel 102 and a plasmonic sensor 104. The plasmonic sensor 104 is arranged within the fluidic channel 102. The plasmonic sensor 104 is arranged to exhibit, upon resonant excitation, a localized surface plasmon resonance condition, LSPR condition, whereby a sensing volume 106 is formed within the fluidic channel 102. The sensor 100 further comprises a binding portion 108 arranged inside the sensing volume 106 for binding the analyte. Thus, the sensor 100 is arranged such that an analyte present in the fluid may bind to the binding portion 108 which influences the local environment of the plasmonic sensor 104 and thereby the LSPR condition. A detection of the analyte is thereby facilitated by measuring a change to the LSPR condition, as will be described below.

The binding portion 108 is, moreover, arranged at a distance from the walls 110 of the fluidic channel 102. The binding portion 108 may thereby be arranged, for example, centrally within the fluidic channel 102. The fluid may surround the binding portion.

The binding portion 108 is integrated in the plasmonic sensor 104 by the binding portion 108 being formed on the plasmonic sensor 104. An advantage is that the fluid and the analyte may be directed to the plasmonic sensor 104 and thereby to the binding portion 108. An efficient binding of the analyte at a location inside the fluidic channel 102 may thereby be achieved.

The sensor 100 may further comprise one additional plasmonic sensor 112 comprising an additional binding portion 114 within an additional sensing volume 116 of the additional plasmonic sensor 112. The binding portions 108 and 114 of the plasmonic sensors 104 and 112 may be arranged to bind the same analyte. A series of measurement points for detecting the presence of the analyte in the fluid may thereby be provided. The concentration of analytes within the fluid may be determined by the sensor 100.

Alternatively, the binding portions 108 and 114 of the plasmonic sensors 104 and 112 may be arranged to bind different analytes. The binding portion 108 may be arranged to bind a first analyte and the additional binding portion 114 may be arranged to bind a second analyte, the second analyte being different to the first analyte. A plurality of measurements points may thereby be used to detect different analytes within the fluid. The sensor 100 may thereby be used for multiplexing. Each of the binding portions 108, 114 may thus be arranged to selectively bind a predetermined analyte. A number of different analytes present in the fluid may thereby be detected.

Thus, the sensor may comprise a plurality of plasmonic sensors separately arranged along the fluidic channel. The plurality of plasmonic sensors allows for detection of an analyte along the fluidic channel. The flow rate of the analytes may moreover be determined by such an arrangement of a plurality of plasmonic sensors along the fluidic channel.

Alternatively, a plurality of fluidic channels may be provided. Each fluidic channel may comprise a plasmonic sensor and or a plurality of plasmonic sensors. The binding portion of a plasmonic sensor of a first fluidic channel may be arranged to bind a different analyte than the binding portion of the plasmonic sensor of a second fluidic channel. A sensor comprising a plurality of fluidic channels may thereby be used for multiplexing.

Fig. 2 illustrates a sensor 200 comprising a plasmonic sensor 202. The plasmonic sensor 202 comprises a pair of plasmonic sensor elements 204 arranged to collectively create the sensing volume 206 upon resonant excitation of the plasmonic sensor 202.

The plasmonic sensor elements 204 are arranged at opposite sides of the fluidic channel 102, the opposite sides of the fluidic channel being opposite to each other. An efficient formation of the sensing volume 206 within the fluidic channel 102 is thereby provided. The arrangement of the plasmonic sensor elements 204 provides an improved field enhancement in the sensing volume 206.

The plasmonic elements 204 are illustrated to have triangular shapes such that a so-called bow-tie antenna is provided. The plasmonic elements may alternatively be truncated pyramids, disk, cylinders, spheres or having other geometrical shapes. The skilled person in the art realizes that, for example, the amount of field enhancement is dependent on size, shape, material and distance between the plasmonic elements as well as the dielectric properties of material surrounding the plasmonic elements.

The apexes of the plasmonic elements 204 are arranged inside the fluidic channel 102. A portion of the plasmonic sensor 202 is thereby arranged inside the fluidic channel 102. An analyte may as a result be efficiently guided to the plasmonic sensor 202, which increases the probability for detection of the analyte.

Binding portions 208 are arranged on both plasmonic elements 204 to improve the binding of the analyte in the fluid as discussed above.

It should further be noted that the binding portion may be formed by the plasmonic sensor or be arranged on the plasmonic sensor. Alternatively, or in combination, the binding portion may be formed by another element adjacent to the plasmonic sensors as will be exemplified below. In other words, the plasmonic sensor may thereby form the binding portion or a binding portion may be arranged on the plasmonic sensor.

An advantage of the binding portion being arranged on the plasmonic sensor is that charge transfer between the analyte and the plasmonic sensor may be utilized for the detection of an analyte being bound to the binding portion. Fluorescence from the analyte may moreover be quenched.

The binding portion may alternatively be arranged at a distance from the plasmonic sensor. Undesirable chemical interaction or charge transport between the analyte and the plasmonic sensor may thereby be prevented. The distance may for example be less than 10 nm, preferably less than 1 nm.

A spacer may further be arranged in between the plasmonic sensor and the binding portion. The spacer may thereby provide an improved adhesion of the binder of the binding portion to the plasmonic sensor. The spacer layer may further protect the plasmonic sensor. The spacer may be a metal layer such as Cr. The spacer may comprise or be formed by a dielectric layer. The dielectric layer may be arranged to prevent that the fluid interacts with the plasmonic sensor. The plasmonic sensor may thereby be protected. Thus a more robust and durable plasmonic sensor may be achieved.

The binding portion may, for example, be a protrusion such as an island or disk formed at a surface of the fluidic channel, the protrusion being arranged to bind the analyte as will be described next. The protrusion may comprise a material different from the material forming the fluidic channel. An improved selectivity in the binding of the analyte to the protrusion may thereby be achieved. The protrusion may be formed at any surface of the fluidic channel. Hence, the protrusion may be formed at the bottom or top surface of the fluidic channel.

The protrusion may form a binder body. A binder may further be arranged on the binder body for binding the analyte.

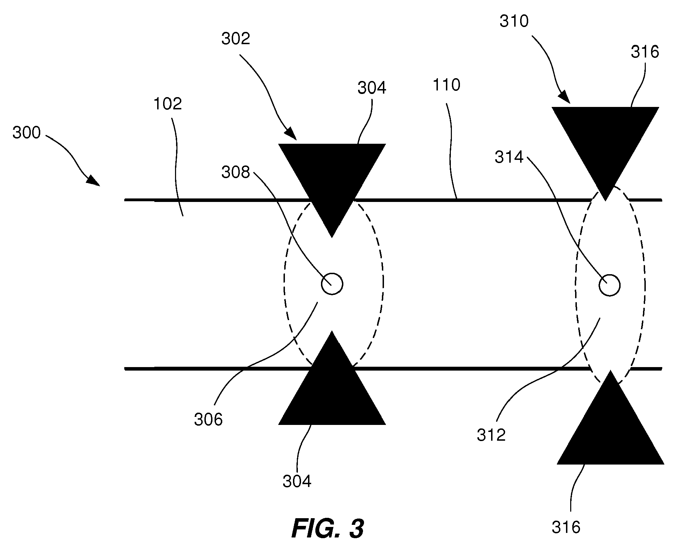

Fig. 3 illustrates a sensor 300, the sensor 300 comprising a plasmonic sensor 302. The plasmonic sensor 302 comprises a pair of plasmonic sensor elements 304 arranged to collectively create the sensing volume 306 upon resonant excitation of the plasmonic sensor 302. The apexes of the plasmonic elements 304 are arranged inside the fluidic channel.

A protrusion 308 is arranged in the fluidic channel 102 at a location in between plasmonic sensor elements 304. The protrusion 308 is arranged inside the sensing volume 306 of the plasmonic sensor 302. The protrusion 308 may form a binding portion or alternatively a binding portion may be formed on the protrusion.

It should be noted that a plasmonic sensor 310 may alternatively be arranged in close vicinity to or partially within the fluidic channel 102 as long as the sensing volume 312 of the plasmonic sensor 310 is fully or partially within the fluidic channel 102. To this end, plasmonic sensor elements 316 may be arranged outside the fluidic channel 102, i.e. be arranged adjacent to or in contact with the walls 110 of the fluidic channel 102, see Fig. 3. An additional protrusion 314 is further arranged in the fluidic channel 102 and between the sensor elements 316.

The protrusion may be centrally arranged in relation to the plasmonic sensor elements.

The protrusion may be seen as a binder body onto which a binder is arranged to form a binding portion.

The binder body may form an island formed at a surface of the channel. The contacting may be achieved by flowing a fluid comprising the binder passed the binding body such that the binder may adhere to the binder body.

The protrusion may or may not form part of the plasmonic sensor. Thus, the protrusion may form one plasmonic sensor element of the plasmonic sensor.

The binder body may alternatively be formed by a recess or a region within the fluidic channel having a material contrast to the material of the fluidic channel.

To this end, the fluidic channel may be defined by a first material and the plasmonic sensor or the binder body may comprise or be formed by a second material, the second material being different from first material. A material contrast between the first and the second material may provide an improved selectivity in the binding to the binding portion. In other words, the probability of an analyte to bind to the plasmonic sensor or the binder body is increased. An advantage being that a material contrast is provided. The first material may comprise or be formed by a dielectric material or semiconductor material such as silicon, SiO₂, Si₃N₄, or Al₂O₃.

The second material may comprise or be formed by a semiconductor and/or a metal.

The second material may comprise or be formed by graphene or a highly doped semiconductor, which exhibits LSPRs.

Second material may be a metal selected from a group consisting of Ag, Au, Cu, Al, Mg, Ni, Pd and Pt, or alloys comprising at least one metal selected from the group.

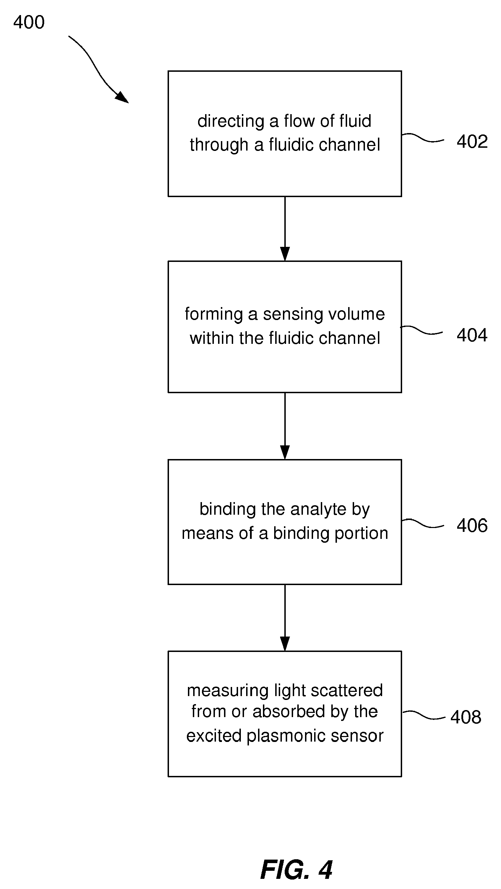

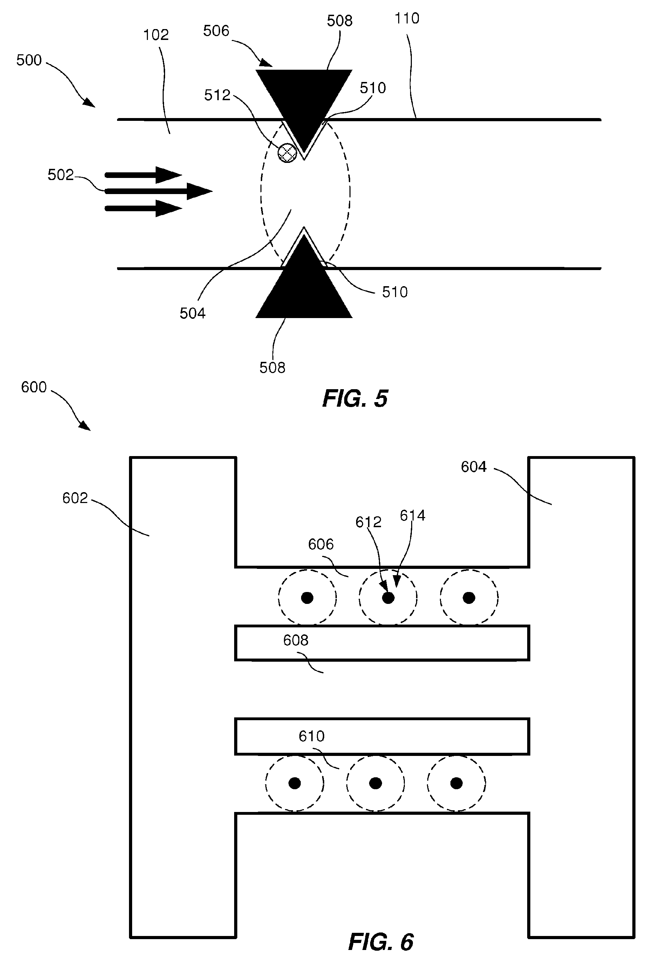

Next a method for detecting an analyte in a fluid is discussed with reference to figures 4 and 5. Fig. 4 illustrates a flow chart illustrating a method 400 for detecting an analyte. Fig. 5 illustrates the corresponding events in a sensor 500.

The method 400 comprises the act of directing 402 a flow 502 of a fluid through a fluidic channel 102 and the act of forming 404 a sensing volume 504 within the fluidic channel 102 by resonantly exciting the plasmonic sensor 506 such that the plasmonic sensor 506 exhibits a localized surface plasmon resonance condition. The plasmonic sensor 506 comprises a pair of plasmonic sensor elements 508. The pair of plasmonic sensor elements 508 are arranged to collectively create the sensing volume 504 upon resonant excitation of the plasmonic sensor 506. The apexes of the plasmonic elements 508 are arranged inside the fluidic channel 102.

Binding portions 510 are further provided on the apexes of the plasmonic elements 508 such that they are arranged within the sensing volume 504. An analyte 512 present in the fluid may be directed towards the plasmonic elements 508 of the plasmonic sensor 506. The analyte 512 may bind 406, by contacting the binding portions 510 inside the sensing volume 504, see Fig. 4.

Alternatively, the plasmonic sensor may form the binding portion such that an analyte is bound to the plasmonic sensor.

An advantage of arranging the plasmonic sensor within or partly within the fluidic channel is that a sensor is provided which overcomes the diffusion limit at a single plasmonic sensor level. The sensor thereby enables fast and direct delivery of analytes, such as molecules, to the plasmonic sensor. A faster detection time of an analyte in a fluid is therefore provided.

To this end, an advantage of arranging the plasmonic sensor or plasmonic sensor elements, partly within the fluidic channel is that the analyte may efficiently be directed to and bound to a portion of the plasmonic sensor having an electric field enhancement when resonantly excited. In other words, the probability for the analyte to bind at a portion of the plasmonic sensor, which influences the LSPR condition, is improved.

The position of the plasmonic sensor having the largest field enhancement, and thereby the largest sensitivity, the so called hot spot, depends, for example, on the shape of the plasmonic sensor, the dielectric function or functions of the surrounding of the plasmonic sensor and the excitation of the plasmonic sensor. The wavelength and/or polarization of light exciting the plasmonic sensor may for example influence the location of the hot spot. For a bowtie arrangement such as in Fig. 4, the largest field enhancement may be formed in between the apexes of the plasmonic elements, i.e. in the region having the smallest gap between the two plasmonic elements. The same holds for a sensor comprising a pair of plasmonic sensor elements, where the plasmonic sensor elements are shaped as discs, cylinders or spheres. Thus, directing the analyte to this region, as discussed above, improves the sensitivity of the sensor. An improved detection of the analyte is thereby provided. In other words, the probability of an analyte binding to a portion of the plasmonic sensor where the plasmonic sensor's sensitivity is lower than at the hotspot is mitigated.

The binding 406 of the analyte 512 to the binding portion 510 influences the localized surface plasmon resonance condition of the plasmonic sensor 506 as discussed above. As a result, the amount of light of a specific wavelength that is scattered from or absorbed by the plasmonic sensor 506 and/or the sensing volume 504 is different from that when no analyte is bound to the binding portion 510. Hence, a given light intensity at the specific wavelength is scattered from or absorbed by the plasmonic sensor 506 and/or the sensing volume 504 is indicative of the analyte being present in the fluid. The binding 406 of the analyte may be detected by a change in the scattered or absorbed light by measuring 408 light scattered from or absorbed by the excited plasmonic sensor 506 and/or the sensing volume 504. This may, for example, be achieved by measuring scattering, extinction or absorption of light.

The method may further comprise selecting a binding portion on basis of the analyte to be detected. The sensitivity of the method may thereby be improved. The binding portion may provide binding of a predetermined analyte to the binding portion. Hence, an analyte selective binding may be provided.

### Examples

The following descriptions of experiments are intended to be examples of the embodiments disclosed herein, and are not intended to be limiting. In the following different experimental realizations of sensors for detecting an analyte in a fluid are described.

### Measurements

Fig. 6 shows a schematic drawing, not to scale, of a fabricated sensor 600 comprising two fluidic channels 602 and 604 of 20 µm width and 1.5 µm depth, and an array of fluidic channels 606, 608 and 610 of 120 nm width, 30 nm depth and 240 µm length. Disc-shaped gold plasmonic sensors 612 having a thickness of 30 nm and diameter of 90 nm, are arranged periodically inside the fluidic channels 606 and 610 with a pitch of 20 µm. The plasmonic sensors 612 are addressable individually for in situ plasmonic sensing inside the fluidic channels by means of dark-field scattering spectroscopy. A fluidic channel 608 is formed without plasmonic sensors 612 to allow for background measurements.

The diameter of the 30 nm thick plasmonic disc-shaped plasmonic sensors 612 is set to 90 nm such that the localized surface plasmon resonances condition, LSPR condition, is at visible light frequencies.

To probe the entire volume of fluid passing by the plasmonic sensors 612, i.e. any fluid and/or analyte flowing through the fluidic channels 606 and 610 should pass within the sensing volumes 614 of the plasmonic sensors 612. The extent of the sensing volume 612 is set by the plasmonic field decay length, for a gold disk typically 20 - 30 nm. Hence, the dimensions of the fluidic channels 606 and 610 are here set to be 130 nm in width and 30 nm in height.

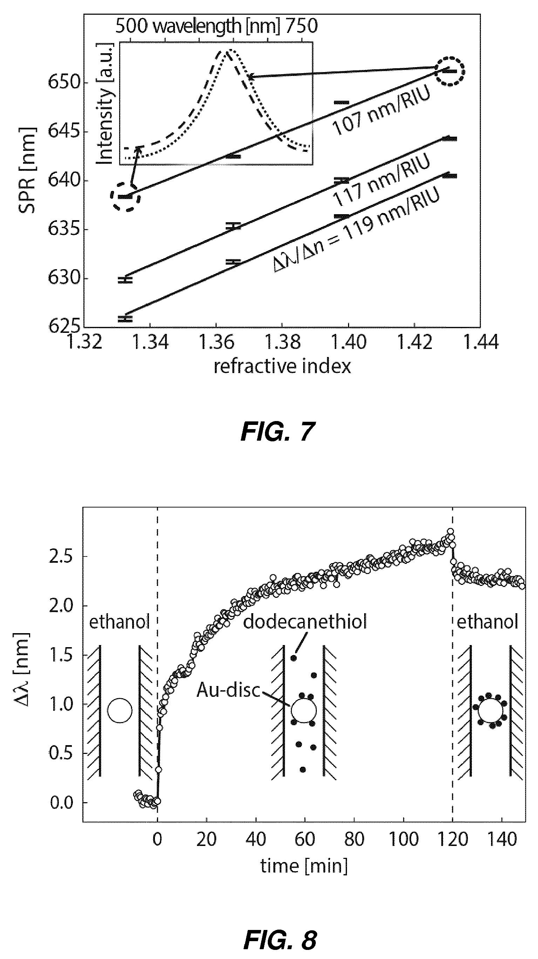

Fig. 7 illustrates the measured LSPRs of a gold plasmonic sensor 612 as a function of refractive index, n, of the fluid in the fluidic channels 606, 608, 610. The results demonstrate the integrated sensing capability of the sensor 600. The different values of n were realized by filling the fluidic channels with different ethylene glycol/water mixtures. From the shift in wavelength, Δλ, of the LSPR condition upon changing the fluid the bulk refractive index sensitivity, Δλ/Δn, of the individual plasmonic sensors 612 is determined. The corresponding values obtained, i.e. 117, 119, and 107 nm/refractive index unit, are in good agreement with measurements on ensembles of similar gold structures.

The experimental results of Fig. 8 demonstrate the possibility to detect binding of analytes to plasmonic sensors 612 inside the fluidic channels 608 and 610. The analytes in this example are molecules, which are bound to the plasmonic sensors 612.

Fig. 8 shows the time-dependent LSPR shift, Δλ of an individual gold plasmonic sensor 612 in a fluidic channel initially filled with ethanol. The fluidic channel is then flushed with an ethanol based dodecanethiol solution, and subsequently rinsed with ethanol again. The observed kinetics of Δλ are similar to previously reported binding kinetics of alkanethiols to open gold surfaces and the magnitude of the final Δλ-value, 2.3 nm, compares well with reported LSPR shifts caused by thiol molecules binding to gold or silver plasmonic sensors of similar dimensions. The here obtained Δλ-value is slightly smaller since it is measured in solvent, which yields a smaller refractive index contrast compared to N₂ used in the literature. Moreover, the finite Δλ-value upon rinsing shows the mainly irreversible character of the binding process, as expected for a thiol. Note that the instantaneous decline of Δλ upon switching back to ethanol, as well as a corresponding part of the instantaneous increase when introducing the thiol solution, can be attributed to different refractive indices of the two liquids.

In more detail, the open circles in Fig. 8 indicate the shift Δλ of the LSPR of one of the gold plasmonic sensors 612 inside a fluidic channel due to binding of dodecanethiol molecules to the surface of the plasmonic sensor. The fluidic channel was successively rinsed with ethanol, the region to the left, i.e. below time 0, a 50mM ethanol based dodecanethiol solution, the region in the middle, i.e. between 0 and 120 min, and ethanol, the region to the right, i.e. above time 120 min. Insets depict the suggested process of thiol binding to plasmonic sensor 612 inside the fluidic channel. The instantaneous decline of Δλ upon switching back to ethanol, as well as a corresponding part of the instantaneous increase when introducing the thiol solution, can be attributed to different refractive indices of the two liquids.

The skilled person in the art realizes that the alkanethiols in this example are the analytes. The bound alkanethiols on the plasmonic sensors may, however, in other experiments be used to form the binding portion on the plasmonic sensors. The alkanethiols may thereby form a binder. Hence, the binding portion comprising alkanethiol may form receptor molecules for specific binding to analyte molecules. Examples of such analyte molecules are proteins, nucleic acids and viruses

### Sample preparation

Both fluidic channels and plasmonic sensors were defined with standard electron-beam lithography techniques. In order to align the two kinds of structures the same set of alignment marks was used while protecting the marks during all process steps to keep them unchanged. All fluid channels were created with reactive-ion etching using fluorine-based chemistry. The lids, Pyrex, 175 µm thickness, were fusion-bonded to the substrates, silicon with 120 nm thermal oxide, for 5 hours at 550°C. The skilled person realizes that other methods for forming the fluidic channels may be used, such as nano-imprint lithography.

### Plasmonic sensing experiments

Single particle dark-field scattering measurements were carried out on a Nikon Eclipse LV100 upright optical microscope, using a 50 W halogen lamp, Nikon LV-HL50W LL, as excitation source. Rayleigh scattered light from the plasmonic sensors was collected with a 100x objective, Nikon 100 BD, and an optical fiber, Ocean Optics, UV-vis 600 µm core, resulting in an estimated sampling area of approximately 6 µm². Directed to the entrance slit, 1 mm, of a spectrometer, Andor Shamrock SR303i, the collected light was dispersed with a grating, 150 lines/mm, blaze wavelength 800 nm, and scattering spectra were recorded using a thermoelectrically cooled CCD camera, Andor Newton. An acquisition time of 125 ms was used for all experiments, but in case of static measurements, data was averaged over 240 acquisitions to reduce noise.

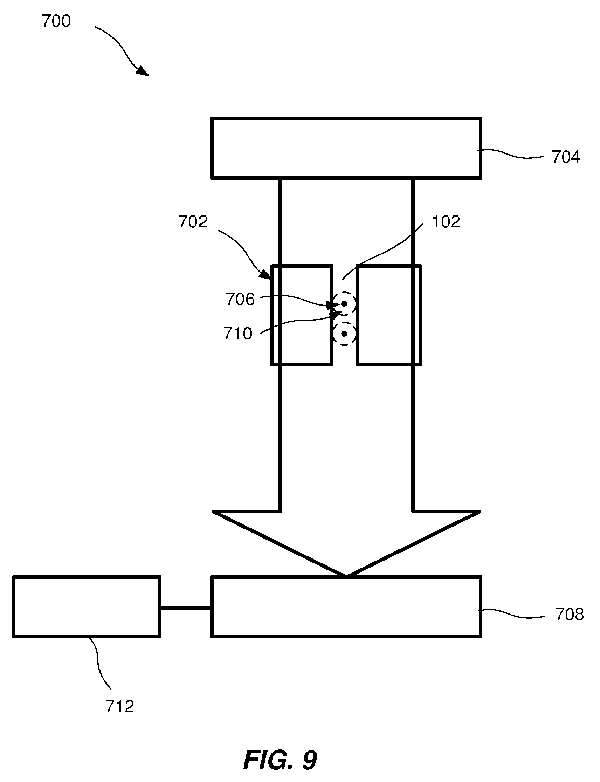

Figure 9 illustrates a system for detecting an analyte in a fluid. The system 700 is illustrated in a top view. The system 700 comprises a sensor 702 according to the above, an excitation source 704 arranged to resonantly excite the plasmonic sensors 706 of the sensor 702. The excitation source 704 is a light source arranged to direct light along the fluidic channel 102. Problems associated with light scattering from the channel may thereby be reduced.

A detector 708 is further arranged to detect light scattered from or absorbed, e.g. by measuring scattering, absorption or extinction, by the excited plasmonic sensor 706 and/or the sensing volumes 710 of the plasmonic sensors 706. The detector is in Fig. 9 arranged after the sensor 702 as seen from the excitation source 704. The detector may, however in other configurations be arranged below or above the sensor 702. The detector 708 may be a photo detector or a CCD. The detector 708 may provide for a spatial separation of the detected light scattered from or absorbed by the excited plasmonic sensors 706 and/or the sensing volumes 710 of the plasmonic sensors 706. It is thereby possible to spatially separate light pertaining to different plasmonic sensors 706. Assessment of if an analyte is bound to a certain plasmonic sensor 706 is thereby possible. The directionality of the light scattered from a plasmonic sensor 706 may, moreover, be determined which may be indicative of if an analyte is bound to a plasmonic sensor or a binding portion pertaining to a plasmonic sensor.

The light source may, for example, be a VCSEL or edge-emitting laser to conceptually prove the MEMS-compatibility.

A processing unit 712 may further be provided in the system 700. The processing unit 712 may be used to determine changes in the scattered and/or absorbed light caused by a change in the LSPR condition when an analyte is bound to the plasmonic sensor 706. The system 700 may thereby take advantage of the reliability and robustness of the sensor 702 when detecting the analyte. An efficient system for monitoring LSPR and changes to the LSPR is furthermore provided by detecting electromagnetic radiation that is being scattered and/or absorbed by the plasmonic sensor and/or to the sensing volume 710.

It should be noted that the system 700 may be arranged to monitor at least one LSPR of a plasmonic sensor and/or a plurality of plasmonic sensors by using spatially and/or spectrally resolved spectroscopic and/or imaging techniques.

The system 700 allows for integration of the components on a chip, the chip comprising at least a portion of the components of the system. This allows for a lab-on-chip device comprising the fluidic channels and plasmonic sensors, the device having integrated excitation and/or readout.

In the above discussion, light scattered from or absorbed by the excited plasmonic sensors and/or the sensing volumes have been discussed.

The plasmonic sensor may be arranged to provide surface-enhanced Raman scattering, SERS. The wording *surface-enhanced Raman scattering,* SERS, structure should be understood as a structure that enhances Raman scattering by analytes being bound or adsorbed on the surface of the structure. The enhanced Raman scattering may be used to detect and identify the analyte binding to the SERS structure, i.e. to the plasmonic sensor. Hence, the presence of an analyte in the fluid may be detected.

The enhanced electrical fields in the vicinity of the plasmonic sensor may increase the excitation efficiency of an analyte binding to the surface of the SERS structure. The amount of scattered radiation from the adsorbed compound may thereby be enhanced. As a result, an increased Raman scattering signal may be detected for the bound analyte. Hence, the SERS structure may provide improved detection efficiency of the analyte binding to it. SERS is further advantageous as it requires little to no sample preparation, and may be used in numerous environments. The SERS effect may also be relatively insensitive to the wavelength of excitation employed and may produce a narrowband spectral signature unique to the molecular vibrations of the analyte. In other words, SERS may efficiently provide a unique molecular fingerprint from which the presence of an analyte in the fluid may be detected with improved sensitivity. The identity of the analyte binding to the SERS structure may further be determined from the molecular fingerprint of the analyte.

The plasmon sensors may further allow for surface-enhanced infrared absorption spectroscopy, SEIRAS, representing a variation of conventional infrared spectroscopy and exploits the signal enhancement exerted by the localized surface plasmon resonance of the plasmonic sensors.

To this end, the measured light scattered or absorbed in SERS or SEIRAS may originate from the plasmonic sensor, an analyte bound within the sensing volume or by both.

To this end, the binding portion may be arranged on or at a close distance, e.g. below 5 nm, from the plasmonic sensor. Such arrangements may quench the fluorescence from the analyte. An improved detection of SERS or SEIRAS may thereby be provided.

Alternatively, the binding portion may be arranged at a distance from the plasmonic sensor. The distance may be tailored to provide fluorescence enhancement for an analyte. Fluorescence from the analyte may thereby be measured to detect the binding of the analyte to the binding portion, i.e. by measuring a change in the scattered light from the sensing volume. The fluorescence may provide a molecular fingerprint of the analyte allowing for identification of the analyte.

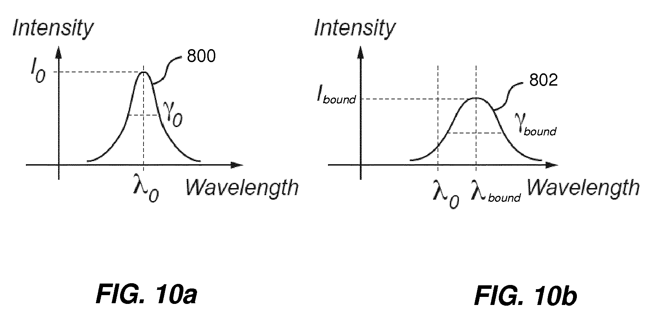

Figures 10a and 10b illustrate schematically how an analyte binding to a plasmonic sensor is detected by the system 700 disclosed in Fig. 9. Figure 10a illustrates the sensor 702 described above without the analyte being bound to it. Using the system 700 light that is scattered by the plasmonic sensor is acquired by the detector 708. An extinction spectrum 800 pertaining to the excitation of LSPR of the plasmonic sensor 706 is obtained by use of the processing unit 712 and conventional methods to, for instance, normalize light from the excitation source 704.

The extinction spectrum 800 has characteristic features resulting from the choice of plasmonic sensors 706 and the materials used in formed fluidic channel 102 and the fluid within the fluidic channel 102.

The extinction spectrum 800 may be described by parameters such as the centre wavelength λ₀, the peak intensity I₀, and the full width at half maximum γ₀ of the spectrum. The full width at half maximum γ₀ is for instance related to the damping of the LSPR of the plasmonic sensors 706. The parameters may be determined by the processing unit 712 by analysing the extinction spectrum 800.

Figure 10b illustrates the same sensor 702 described above but now with the presence of an anlayte in the fluid, the analyte being bound to the plasmonic sensor 706 of the sensor 702. As a result an extinction spectrum 802 is instead obtained, as illustrated in figure 10b. In this example the extinction spectrum 704 has a centre wavelength λ_{bound}, and the peak intensity I_{bound}, and the full width at half maximum γ_{bound} which all differ from those of spectrum 800. By detecting at least one of the differences between the two extinction spectra 800 and 802 the binding of the analyte may be detected.

A person skilled in the art realizes that other types of optical processes such as scattering and absorption may instead be monitored to detect the analyte. It should be noted that in other embodiments only one of the disclosed changes to the optical properties of the plasmonic sensors may be present which may correspond to a change of at least one of a spectral shift of resonance frequency, an amplitude shift, i.e. a change in magnitude, and a change of damping, i.e. the full width at half maximum, of the LSPR condition

Alternatively, electrical detection of charge carriers pertaining to the plasmons of the plasmonic sensors may be used to detect a bound analyte.

The excitation source has here been described as a light source providing a broadband illumination. The wording *broadband* should here be understood as illumination spanning over a spectral range of different wavelengths. The spectral range may for example span over 20 - 1000 nm, depending on application. Hence, the spectral range may be broad enough to allow for the acquisition of the extinction spectrum as discussed above.

The light source may, for example, be a high brightness white LED or a super continuum laser providing efficient broadband illumination.

The light source may, alternatively, emit light around a single wavelength, preferably a monochromatic light from a laser or an LED.

The linewidth of the laser may, for example, be below 1 nm allowing for efficient detection of individual Raman modes. The emission wavelength of the laser may further, for example, be selected from the group of wavelength consisting of 514 nm, 532 nm, 633 nm, and 785 nm. The suitable output power of the laser light depends on application and may, for example, range from 10mW to 1 W. The skilled person in the art realizes that other laser wavelengths and laser powers may be used.

The person skilled in the art realizes that the present invention by no means is limited to the preferred embodiments described above. On the contrary, many modifications and variations are possible within the scope of the appended claims.

For example, the binding portion may further be arranged at a distance from the plasmonic sensor. An analyte bound to the binding portion may thereby be separated from the plasmonic sensor.

The fluidic channel may have a rectangular cross-section.

The plasmonic sensor may be fully or partially arranged in the fluidic channel or arranged outside the fluidic channel.

At least a portion of the plasmonic sensor elements may be arranged inside the fluidic channel. An analyte may thereby be efficiently guided to the plasmonic sensor elements. Constraints on the width of the fluidic channel are, moreover, reduced as the fluid may efficiently be brought in contact with the plasmonic sensor elements. A larger field enhancement within the fluidic channel may be provided without the need to reduce the width of the fluidic channel. A more efficient flow of fluid through the fluidic channel may thereby be obtained.

Charge carriers, such as electrons, may also be used to excite the plasmonic sensor. Resonant excitation may therefore be understood as resonant excitation by light or charge carriers such that the plasmonic sensor exhibits an LSPR. To this end, a change in the LSPR condition may, for example, be detected by photoluminence measurements or electron energy loss spectroscopy, EELS, for probing the local density of states in of the plasmonic sensor and/or the sensing volume.

The fluidic channel may have a height and/or width in the range of 50 - 500 nm, and a length in the range 0.01 - 1000 µm. The fluidic channel may therefore be referred to as a nanofluidic channel or nanochannel. The skilled person in the art, however, realizes that the height and/or width of the fluidic channel may be smaller or larger, e.g., 1 nm - 1000 nm. The length of the fluidic channel may moreover be larger such as having a length on the cm-scale.

The fluidic channel may comprise a narrower portion and a plasmonic sensor may be arranged within the narrower portion. The sensing volume of the plasmonic sensor may then span the width of the narrower portion. A more efficient detection of an analyte in the fluid may thereby be achieved. The distance between the pair of plasmonic sensor elements may be 1 - 200 nm, preferably below 10 nm.

The plasmonic sensor or the plasmonic sensor elements may alternatively be in the form of a nanoscale structure such as a disk, rod, wire, ellipse, polygon, triangle, sphere, cube, star, shell, core-shell particle, rice or ring. Thus, the plasmonic sensor elements may form a plasmonic structure comprising paired nanoscale structures such as metal strips, rods, bowtie shaped structures, discs, or spheres. Hence, the plasmonic sensor elements may form dimers.

Alternatively the plasmonic sensor may comprise an assembly of plasmonic sensor elements arranged to form, for example, trimer, tetramer, pentamer, hexamer, and heptamer patterns. The assembly of plasmonic sensor elements may thereby be arranged to form a cavitiy, also referred to as a nanocavity within the fluidic channel. To this end, assemblies or clusters of plasmonic sensor elements may support Fano resonances. For such structures the interference between bright and dark modes of the assemblies is strongly dependent upon both geometry and local dielectric environment. Hence, these permit a highly sensitive tunability of the Fano dip in both wavelength and amplitude by varying assembly dimensions, geometry, and relative size of the individual plasmonic sensor elements. The Fano resonances in, for example, pentamer or heptamer assemblies of plasmonic sensor elements may therefore be excited and used to probe the binding of an anlayte as this changes the local dielectric environment of the plasmonic sensor.

The plasmonic sensor element may have dimensions in the range 5-500 nm in a direction parallel to the fluid channel. The height of the plasmonic sensor element may vary in the range of 5-100 nm. The height of the plasmonic sensor element may be the same as the height of the fluidic channel.

The fluid may be a gas such as air. The binding portion may be arranged to bind an analyte in the gas. The analyte may be a compound in its solid or liquid phase.

The analyte may alternatively be a compound in its gas phase. The binding portion may comprise or be formed by a gas permeable material. The gas permeable material may comprise a porous material. The wording *porous material* may be construed as a material comprising pores, i.e., voids, cavities, channels and/or, interstices. The porous material may comprise pores being closed, open, blind, and/or through pores. The porous material is advantageous to use as it provides a large surface to volume ratio for gas adsorption. Thus, the porous material may bind a gas.

It has further been found that when gas enters such a porous material, the refractive index and/or the extinction coefficient of the porous material may change. Thus, the LSPR condition for the plasmonic sensor is changed when the gas, i.e. the analyte, is bound to the binding portion inside the sensing volume.

Furthermore, the optical properties of the porous material may not only change by the gas being adsorbed in the porous material, but may also change due to the gas reacting with the porous material.

As a non-limiting example, sensing of hydrogen gas will be discussed. The binding portion may comprise or be formed by a metal such as Pd. Pd is known to absorb hydrogen which changes its refractive index and/or its volume. The hydrogen uptake thereby changes the local environment in the sensing volume of the plasmonic sensor resulting in at least a change of the LSPR condition for the plasmonic sensor and hydrogen may thereby be detected.

The plasmonic sensor may be formed by arranging a body or a layer of Pd adjacent to or in contact with the plasmonic sensor, the plasmonic sensor for example being of Au. Alternatively, the plasmonic sensor may comprise an alloy for example comprising Au and Pd. For a Pd containing plasmonic sensor the resonance frequency for the LSPR condition typically shifts linearly with the concentration of hydrogen inside the Pd. The presence of Au in the PdAu alloy increases the stability of the plasmonic sensor compared to plasmonic sensors consisting of Pd and it reduces hysteresis. A more durable and a substantially hysteresis-free plasmonic sensor may thereby obtained by introducing Au in a Pd plasmonic sensor.

Thus, the binding portion allowing for gas detection may be arranged at a distance from the plasmonic sensor or integrated in the plasmonic sensor.

The gas permeable material may comprise a polymer.

The polymer may be a non-porous material, which, however, when in contact with a gas changes its material structure and/or composition such that the polymer becomes permeable to the gas. Different polymers are permeable to different gases. This is advantageous as improved gas selectivity of the gas binding to the polymer may be obtained.

The fluid and/or the gas analyte may comprise a gas selected from a group consisting of carbon oxides, nitrogen oxides, oxygen, ozone, nitrogen, hydrogen water vapour, sulphur oxides, hydrocarbons, ammonia, ethane, and halogens.

According to one embodiment a sensor for detecting an analyte in a fluid may be provided in which the sensor comprises: a fluidic channel arranged to receive a flow of the fluid, a plasmonic sensor which upon resonant excitation exhibits a localized surface plasmon resonance condition thereby forming a sensing volume within the fluidic channel, wherein at least a portion of the plasmonic sensor is arranged inside the fluidic channel. Analytes in the fluid may thereby be efficiently directed to the plasmonic sensor. An improved sensitivity of the sensor may thereby be provided. An improved field enhancement in the sensing volume may, moreover, be provided.

An advantage of arranging the plasmonic sensor within or partly within the fluidic channel is that a sensor is provided which overcomes the diffusion limit at a single plasmonic sensor level. The sensor thereby enables fast and direct delivery of analytes, such as molecules, to the plasmonic sensor. A faster detection time of an analyte in a fluid is therefore provided. An advantage of arranging the plasmonic sensor, partly within the fluidic channel is that the analyte may efficiently be directed to the plasmonic sensor having an electric field enhancement when resonantly excited. An effect of the arrangement is further that no binding of the analyte to the plasmonic sensor is necessary. Hence, no binding portion has to be provided.

The plasmonic sensor may according to this embodiment comprise or be formed by plasmonic sensor elements. The above-mentioned features of the plasmonic sensor elements, when applicable, apply to this embodiment as well. In order to avoid undue repetition, reference is made to the above. To this end, a method for detecting an analyte in a fluid may be provided. The method comprising: directing a flow of the fluid through a fluidic channel, forming a sensing volume within the fluidic channel by resonantly exciting a plasmonic sensor, the plasmonic sensor thereby exhibiting a localized surface plasmon resonance condition, wherein at least a portion of the plasmonic sensor is arranged inside the fluidic channel, measuring light scattered from or absorbed by the excited plasmonic sensor and/or the sensing volume to detect the analyte in the sensing volume by a change in the scattered or absorbed light.

Additionally, variations to the disclosed embodiments can be understood and effected by the skilled person in practicing the claimed invention, from a study of the drawings, the disclosure, and the appended claims.

## Claims

1. A sensor for detecting an analyte in a fluid, the sensor (100) comprising:
a fluidic channel (102) arranged to receive a flow of the fluid,
a plasmonic sensor (104) which upon resonant excitation exhibits a localized surface plasmon resonance condition thereby forming a sensing volume (106) within the fluidic channel (102),
a binding portion (108) arranged inside the sensing volume (106) for binding the analyte.

2. The sensor according to claim 1, wherein the binding portion (108) is arranged at a distance from the walls (110) of the fluidic channel (102).

3. The sensor according to claim 1 or 2, wherein the binding portion (108) is integrated in the plasmonic sensor (104).

4. The sensor according to claim 1 or 2, wherein the binding portion (308) is arranged at a distance from the plasmonic sensor (302).

5. The sensor according to any one of claims 1 - 4, wherein the plasmonic sensor (202) comprises a pair of plasmonic sensor elements (204) arranged to collectively create the sensing volume (206) upon resonant excitation of the plasmonic sensor (202).

6. The sensor according to claim 5, wherein the plasmonic sensor elements (204) are arranged at opposite sides of the fluidic channel (102).

7. The sensor according to any one of claims 1 - 6, wherein at least a portion of the plasmonic sensor (104) is arranged inside the fluidic channel (102).

8. The sensor according to any one of claims 1 - 7, wherein the fluidic channel (102) is defined by a first material and the plasmonic sensor (104) comprises a second material, the second material being different from the first material.

9. The sensor according to any one of claims 1 - 8, wherein the fluidic channel (102) has a rectangular cross-section.

10. The sensor according to any one of claims 1 - 9, wherein the sensor (100) comprises a plurality of plasmonic sensors (104, 112) separately arranged along the fluidic channel (102).

11. A system for detecting an analyte in a fluid, the system (700) comprising:
the sensor (702) according to any one of the claims 1 - 10,
an excitation source (704) arranged to resonantly excite the plasmonic sensor (706),
a detector (708) arranged to detect light scattered from or absorbed by the excited plasmonic sensor (706) and/or the sensing volume (710).

12. The system according to claim 11, wherein the excitation source (704) is a light source arranged to direct light along the fluidic channel (102).

13. A method for detecting an analyte in a fluid, the method (400) comprising:
directing (402) a flow of the fluid through a fluidic channel,
forming (404) a sensing volume within the fluidic channel by resonantly exciting a plasmonic sensor, the plasmonic sensor thereby exhibiting a localized surface plasmon resonance condition,
binding (406) the analyte by means of a binding portion inside the sensing volume,
measuring (408) light scattered from or absorbed by the excited plasmonic sensor and/or the sensing volume to detect the binding of the analyte by a change in the scattered or absorbed light.

14. The method according to claim 13, further comprising an initial step of forming the binding portion by contacting a binder to a binder body.

15. The method according to any claim 13 or 14, further comprising selecting a binding portion on basis of the analyte to be detected.
